(19) Europäisches Patentamt
European Patent Office
Office européen des brevets

(11) **EP 4 142 139 A1**

(12) **EUROPEAN PATENT APPLICATION**

(43) Date of publication:
**01.03.2023  Bulletin 2023/09**

(21) Application number: **21382786.8**

(22) Date of filing: **27.08.2021**

(51) International Patent Classification (IPC):
**H02N 1/04** *(2006.01)*

(52) Cooperative Patent Classification (CPC):
**H02N 1/04; H02N 11/002**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Consejo Superior de Investigaciones Científicas (CSIC)**
**28006 Madrid (ES)**

(72) Inventors:
- **GHAFFARINEJAD, Ali**
  **41092 Sevilla (ES)**
- **BARRANCO QUERO, Angel**
  **41092 Sevilla (ES)**
- **GARCÍA CASAS, Xavier**
  **41092 Sevilla (ES)**
- **BORRAS MARTOS, Ana Isabel**
  **41092 Sevilla (ES)**
- **SÁNCHEZ VALENCIA, Juan Ramón**
  **41092 Sevilla (ES)**

(74) Representative: **Pons**
**Glorieta Rubén Darío 4**
**28010 Madrid (ES)**

(54) **ENERGY HARVESTING DEVICE AND SELF-POWERED SENSOR USING THE SAME**

(57)    An energy harvesting device for obtaining energy from drops without needing of moving the drops along the device, in a reduced scale and combinable with other types of harvesting devices, the energy harvesting device comprising one or more triboelectric generators comprising a bottom electrode, a friction or triboelectric element placed over the bottom electrode, and at least two top electrodes placed over the triboelectric element and defining at least one gap between them, exposing the triboelectric element to the external environment so that on contacting a drop of liquid makes an electrical connection between the top electrodes varying the capacitance of the triboelectric generators and alternatively for functioning as a power unit for a sensor or as a self-powered sensor producing an electrical signal generated by the contact of the liquid with the electrodes.

FIG. 1

**Description**

**OBJECT OF THE INVENTION**

The invention is in the field of renewable energies, and more specifically is related to an energy harvesting device. The invention is aimed to obtain electric energy from droplets and drops by using a triboelectric effect working from sub millimetric dimensions and scalable to higher sizes.

One object of the present invention is an energy harvesting device having a new configuration for obtaining energy from drops without needing of moving the drops along the device, in a reduced scale and combinable with other types of harvesting devices and configured to work as a sensor or to power an independent sensor.

**BACKGROUND ART**

The field of harvesting ambient environmental energy has gained great interest in the last decade as a response to the ever-increasing demand to find environmentally friendly alternatives to the global dependence to fossil fuels.

One of the applications of the field of energy harvesting is to provide electric power for low-power electronic and wireless devices to reduce their dependency to (rechargeable) batteries. The main motive of the design and fabrication of energy harvesting devices is to develop a system that is capable of converting ambient and free energy from the surrounding environment of the targeted electronic device. The generated energy can directly power up the target device or it can be stored in an energy storage unit for later use.

The use of triboelectric effect for drop energy harvesting was first settled by the group of ZL Wang which presented the combined mechanism of contact electrification and charge induction to explain the voltage generated upon the contact of a sliding water drop and the surface of a triboelectric layer.

The current is generated by the contact and movement of the following drops and flows through a single electrode buried bellow the triboelectric layer.

This same mechanism has been exploited and extended to the presence of two buried electrodes. The contact electrification and charge induction mechanism has been exploited to harvest from falling drops and also from liquids movement within microtubes and hoses.

Some developments combine the triboelectric energy generation with solar light harvesting by emplacing a transparent drop energy harvester on top of a silicon solar cell. A variation of said concept combines two different triboelectric layers and sliding droplet moving from one side to the other.

Another approach is the use of a top exposed electrode on top of the triboelectric layer in such a way that the triboelectric layer is sandwiched between the top metal thin electrode and a bottom extended one or solely using a thin top electrode.

Also, there is some developments using a single electrode in the form of a needle going through the triboelectric layer.

Document US2019280620 discloses an apparatus and method for collecting ambient energy. The apparatus comprises charge storage devices and switching circuits, configured to cyclically alter the connection between the charge storage devices between a series state and a parallel state. Electrically conductive elements can include electrically conductive liquid droplets of materials such as water or mercury. In the device, a droplet of conductive liquid can make electrical contact with a parallel metallic contact or with a series metallic contact but not with both contacts at the same time. Charge storage devices include a capacitance that varies in response to the reception of ambient energy. The simultaneous alteration of the relative capacitance and circuit configuration results in an exponential growth of the collected energy.

Also, document WO15154693 presents a triboelectric nanogenerator that collects mechanical energy from a liquid. The triboelectric nanogenerator comprises an electricity generation component on an insulating substrate and a friction layer that covers the electricity generation component. The electricity generating component is constituted by two layers of electrodes arranged separately along a fluctuation direction of the liquid and electrically connected to each other. When the liquid fluctuates or flows, friction occurs between it and the friction layer, so that the surface of the friction layer in contact with the liquid carries charges. As the liquid fluctuates or flows, the charges on the surfaces of the friction layer corresponding to the two electrode layers are successively shielded by ions in the liquid so that an induced charge flow occurs between the two electrode layers.

Document CN105099260 describes a flowing liquid-based composite power generator. The power generator can be used as a self-powered sensor to detect the concentration of ethanol in a solution. The power generator is mainly formed by stacking an electrostatic induction power generation set and a contact friction power generation set. When a liquid, such as rainwater and water, in the environment touches the power generator, the static electricity from the water can make the electrostatic induction power generation set work and produce electricity. The mechanical energy of flowing water can make the contact friction power generator work and produce electricity at the same time and could be enhanced by arranging the power generator in a sloped position.

However, there is a need for an improved way of harvesting triboelectric energy in a more efficient way, reducing the dependence on external conditions, increasing the electric generation and boosting the compatibility of the triboelectric energy harvesters with other energy conversion or harvesting systems.

## DESCRIPTION OF THE INVENTION

The invention is intended to harvest or convert the energy of falling droplets or moving liquids on the surface of a friction or triboelectric layer, foil, coating, bulk or plate, which will be referred as friction or triboelectric element, by using the triboelectric effect.

The objective of the invention is to harvest energy coming from the fall and/or movement of liquid drops or liquid flow on a surface to produce electric energy. Therefore, an energy harvesting device is presented to generate electric energy based on instantaneous capacitance variation that occurs when a drop or a conductive liquid contacts two thin electrodes on the surface of a friction layer, acting as an insulator material in a capacitor. The invention can generate electric power from any form and type of liquid and flow ranging rain water and chemical compounds to human blood. Therefore, the invention can be placed outdoor to harvest from rain, inside of hoses, tubes or microfluidic systems and also as component of biomedical implants.

The energy harvesting device of the invention comprises one or more triboelectric generators. Each triboelectric generator comprises a bottom electrode, at least one friction or triboelectric element placed over the bottom electrode, and at least two top electrodes placed over the triboelectric element and defining at least one gap between them, being said top electrodes are preferably smaller than the bottom electrode.

Therefore, the triboelectric or friction layer/foil/plate is exposed to the external environment so that on contacting a drop of liquid makes an electrical connection between the top electrodes varying the capacitance of the triboelectric generator.

The energy generated by the energy harvesting device depends on the rate of the change of effective overlapping area and capacitance between the top and bottom electrodes.

The energy harvesting device of the invention could further comprise one or more substrates placed under the triboelectric generators, which could be flexible or non-flat, among others. The energy harvesting device of the invention can be also work as a self-supported system without the need of substrate.

Regarding the materials, the electrodes could be manufactured, without excluding other formulations, using thin metal layers, metallic thin films, transparent conducting oxides and polymers, graphene or metal meshes and could be manufactured having a round, triangular or rectangle shape, among others. Deposition techniques as physical vapor deposition, chemical vapor deposition, wet chemistry methodologies, lithography and printing can be cited as examples of the available methodologies to produce such films.

The active area of the energy harvesting device of the invention is not limited in shape and size. The size of each triboelectric generator can range preferably from the nanometre to millimetre scale or higher depending on the final application. The invention can be multiplied in number in order to cover larger areas or being bigger.

The friction layers also could be manufactured without depositing or injecting electrical charge on its surface or alternatively be charged negatively or positively with the help of charge injection techniques.

The energy harvesting device of the invention can work as a single triboelectric generator to produce electric energy from falling raindrops or any fluid flow, or can integrate a large number of triboelectric generators close together forming a regular or irregular distribution in nanometer to micrometer dimensions for energy harvesting from several hundred (or more) of droplets at the same time.

For obtaining more energy, a high number of triboelectric generators could be manufactured using CMOS (complementary metal-oxide semiconductors), MEMS (microelectromechanical systems), IC (Integrated Circuit), PCB (Printed Circuit Boards) technologies and others such as soft-lithography, printing, and laser patterning methods.

An array of triboelectric generators functions similar to a CCD or CMOS image sensors. In this case, each triboelectric generator can convert the energy of the incoming raindrop or fluid flow to induced electrons to generate electric power.

The energy harvesting device of the invention can also be combined with other energy collection and harvesting mechanisms such as photovoltaic and thermosolar cells, thermoelectric, pyroelectric, piezoelectric and/or alternative triboelectric configurations. Therefore, other types of energy harvesters, such as, at least one photovoltaic or thermosolar cell and/or at least one thermoelectric, pyroelectric, piezoelectric or triboelectric energy harvester could be fabricated sequentially one after another, co-fabricated or connected to the invention, scavenging energy from solar and light sources, temperature gradients or fluctuations and kinetic energy.

In case that the energy harvester is combined with other energy harvesting devices such as solar cells, the triboelectric generators and the substrates could be made of transparent materials to allow the light to reach the energy harvesters. Some selected examples of these materials, without restriction to others, are conducting oxides and conducting polymers for the electrodes and thin layers of polymers or oxides for the triboelectric layer. The substrate could be placed below the triboelectric generators or below all the energy harvesting devices.

For aiding the fluid to move along the energy harvesting device, the triboelectric generators could be arranged in a sloped position with respect to a horizontal plane or present a hydrophobic surface or a surface with a certain slippery behaviour.

The energy harvesting device of the invention could also comprise a power management unit, connected to the triboelectric generators and the at least one photovoltaic or thermosolar cell and/or at least one thermoelectric, pyroelectric, piezoelectric or a different triboelectric energy harvester, to manage the storage and/or use of energy obtained.

The energy harvesting device could be used as a self-powered sensor by acting as a powering unit of a sensor device or acting as a sensor itself. In the latter case, the invention produces different electric outputs (voltage or current) in response to different nature of drops contacting electrodes. The invention can be connected to a unit to analyse the shape, components, amplitude and type of electrical signal (voltage and/or current) generated by the contact of the liquid with the electrodes. Therefore, the characteristics of the liquids contacting the energy harvesting device are derived from the characteristics of the electrical signal generated by said liquids, thus, allowing detection of chemical and physical properties of the liquid, as well as, liquid condensation and droplets size and displacement at different scales (down to nanoscale).

The amplitude and shape of such an electrical signal depends on the chemical and electrical nature of the liquid or fluid drop, its kinetic energy, drop and surface temperatures, volume and contact area of the drop, etc.

Hence, the electrical signal can be used as sensor signal to detect droplets from different liquids, salts contents or pollutants in water, location of the droplet sources, water condensation, the dew point, presence of acidic rain, specific molecules or biomolecules of interest, etc.

In this case, the surface of the triboelectric element also could be chemically functionalized to respond to certain analytes or agents. For instance, the triboelectric layer can be activated by surface functionalization to produce a specific electric signal when a drop of blood from a human with a certain disease contacts the electrodes.

The triboelectric generator of the invention obtains energy from a triboelectric effect by varying the capacitance, $C_{var}$, of the triboelectric generator upon interaction with the liquid. When the liquid makes a contact with the electrodes, the effective overlapping area $A_e$ of the capacitor suddenly increases to $A_e^{Max}$ which makes the total capacitance of the device to increase to $C_{max}$ instantaneously.

Before the drop reaches the electrodes, the effective overlapping area is at minimum value of $A_e^{Min} = 2L_1W$ and the capacitance is $C_{min} = \varepsilon_0\varepsilon_r\frac{A_e^{Min}}{h}$. $L_1$ and W are the dimensions of each top electrode, $\varepsilon_0$ and $\varepsilon_r$ are the vacuum dielectric permittivity and relative permittivity of the friction layer correspondingly and h is the thickness of the triboelectric layer assuming only one layer exists between bottom and top electrodes.

Between the contact and non-contacting states, there is a sudden capacitive variation defined by the ratio r between $C_{max}$ (after the drop contact) and $C_{min}$ (before drop contact).

$$C_{min} = \varepsilon_0\varepsilon_r\frac{A_e^{Min}}{h} \qquad\qquad \text{Eq. 1}$$

$$C_{max} = \varepsilon_0\varepsilon_r\frac{A_e^{Max}}{h} \qquad\qquad \text{Eq. 2}$$

$$r = \frac{C_{max}}{C_{min}} = \frac{A_e^{Max}}{A_e^{Min}} \qquad\qquad \text{Eq. 3}$$

The dissipated power in a load ($R_L$) connected to the device can be calculated as:

$$P = k^2 V_{var}^2\left(\frac{dA_e(t)}{dt}\right)^2 \qquad\qquad \text{Eq. 4}$$

wherein $V_{var}$ is the variable output voltage and k is a constant defined as:

$$k = \left(\frac{\sqrt{R_L}C_0}{S}\right) \qquad \text{Eq. 5}$$

Where $C_0$ is the constant capacitance due to the thickness and S the surface of the triboelectric element.

Therefore, the faster the change of $A_e(t)$ in time is, the higher is the power delivered to the load.

The invention is applicable to solve a critical issue of sources of renewable electric energy which by definition are intermittent, free and random. In this regard, multisource energy harvesters, as explained in the case of the energy harvesting device of the invention is a solution for providing a more constant flow of energy.

Also, self-powered solutions are of paramount importance in the realization and development of sustainable smart cities, the Internet of Things (IoTs) and Wireless Sensor Networks (WSNs).

The key differencing characteristics of the present invention are:

1- A new mechanism for energy harvesting from falling or moving droplets or drops in a fluid based on a sudden capacitance variation. The capacitance variation occurs as the result of instantaneous contact of a single drop with the two electrodes. Therefore, there is no need for the drop to slip or move over a certain distance before contacting the electrodes which helps in reducing the area of the device, preferably, having an active area dimension of nanometre to millimetre scale.

2- Providing the first triboelectric nanogenerator that can be fabricated with micrometre or nanometre dimensions using standard CMOS, soft-lithography, printing or laser patterning technologies.

3- Production of a highly integrated array of inventions using IC, CMOS, MEMS CCD technology, soft-lithography, printing, laser patterning, roll-to-roll processing, or other high yield manufacturing techniques. The integrated array can be made in combination with organic, polymeric, inorganic, hybrid, flexible, and transparent triboelectric elements.

4- Harvesting energy from free falling or moving drops (including rain, droplets moving in pipes, microfluidic channels, human veins, water and other liquids, including complex fluids such as blood) and without the need for external movement or vibration.

5- The application of the system as a self-powered sensor

## DESCRIPTION OF THE DRAWINGS

**Fig. 1.** shows a schematic view of a first preferred embodiment of the energy harvesting device of the invention.

**Fig. 2.** shows a schematic view of the first preferred embodiment of the energy harvesting device of the invention with a drop being deposited over the device.

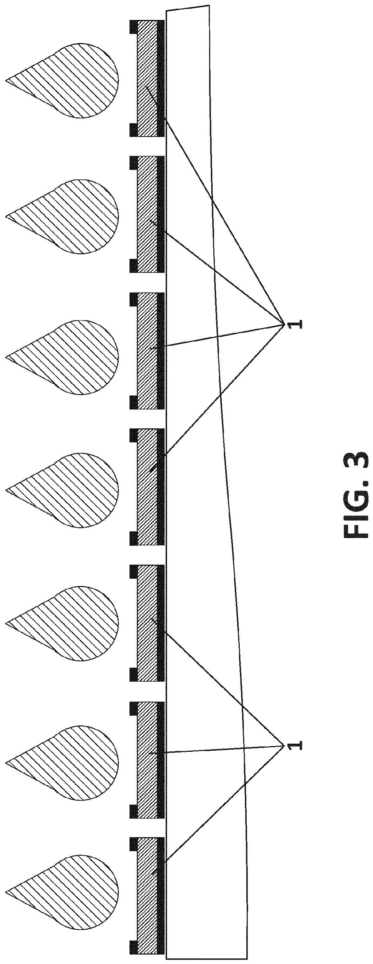

**Fig. 3.** shows a schematic view of a second preferred embodiment of the energy harvesting device of the invention comprising a plurality of triboelectric generators.

**Fig. 4.** shows a schematic view of an array of triboelectric generators. Fig. 4A shows the plurality of triboelectric generators as an ordered array of inventions meanwhile Fig. 4B depicts a plurality of inventions with different sizes or shapes forming an irregular distribution.

**Fig. 5.** shows a schematic view of the second preferred embodiment of the energy harvesting device of the invention where each drop being deposited over a number of triboelectric generators.

**Fig. 6.** shows a schematic view of the second preferred embodiment of the energy harvesting device of the invention having shared electrodes and/or substrates.

**Fig. 7.** shows a schematic view of a third preferred embodiment of the energy harvesting device of the invention comprising other type of energy harvesters to address the potential for multisource energy harvesting. Fig. 7C shows the schematic view where all the energy harvesters are located on top of the substrate. Fig. 7A shows the schematic view where the invention is located on top of the substrate and the rest of the harvesters below the substrate. Fig. 7B shows the combination of the invention with other energy harvesters without the need of a substrate.

**Fig. 8.** shows a schematic view of the third preferred embodiment of the energy harvesting device of the invention comprising other type of energy harvesters and sharing electrodes, substrates and/or the other types of energy harvesters.

**Fig. 9.** shows a graph showing the amount of average of peak output voltage ($V_{out}$) produced by the energy harvesting device of the invention using different types of water. This is an indication for application of the invention as a sensor.

**Fig. 10.** shows a graph showing the amount of average of peak output voltage ($V_{out}$) produced by the energy harvesting device of the invention using different types of liquids. This is an indication for application of the invention as a sensor.

## PREFERRED EMBODIMENTS OF THE INVENTION

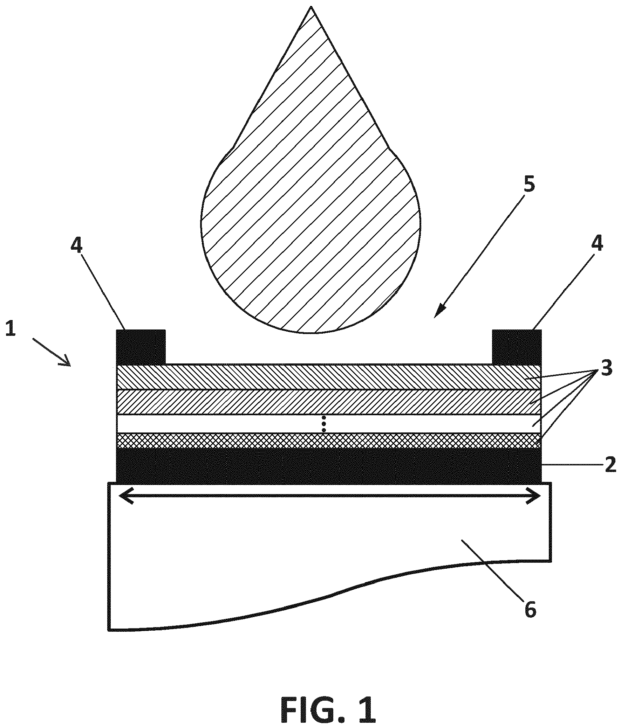

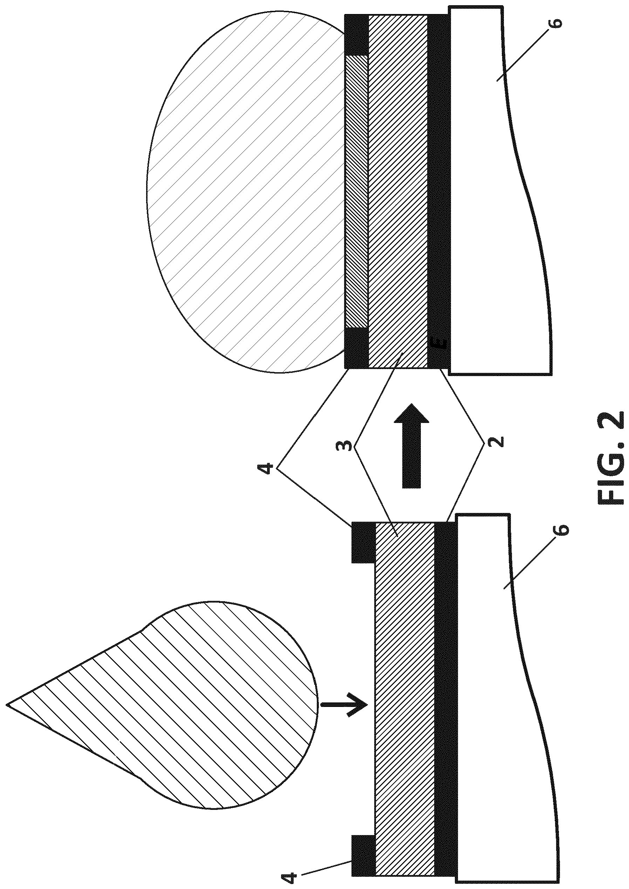

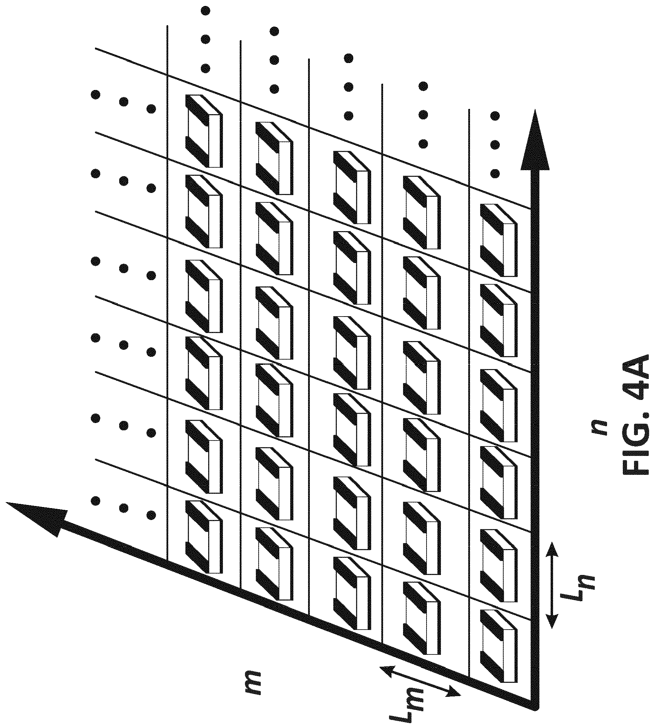

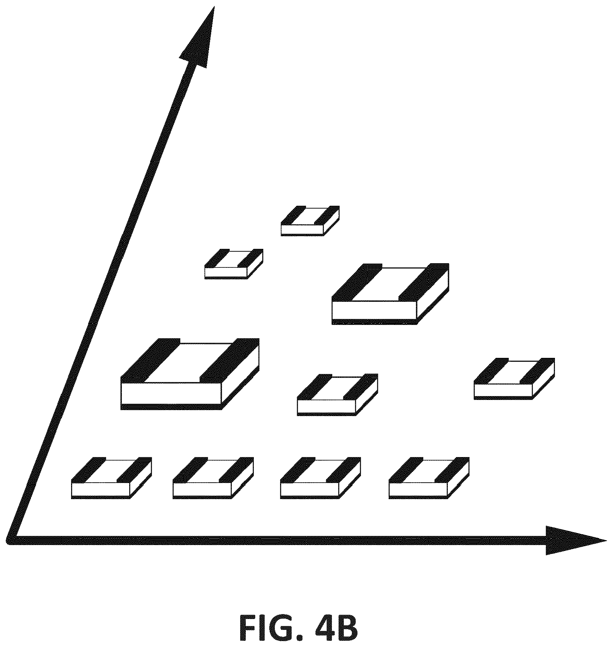

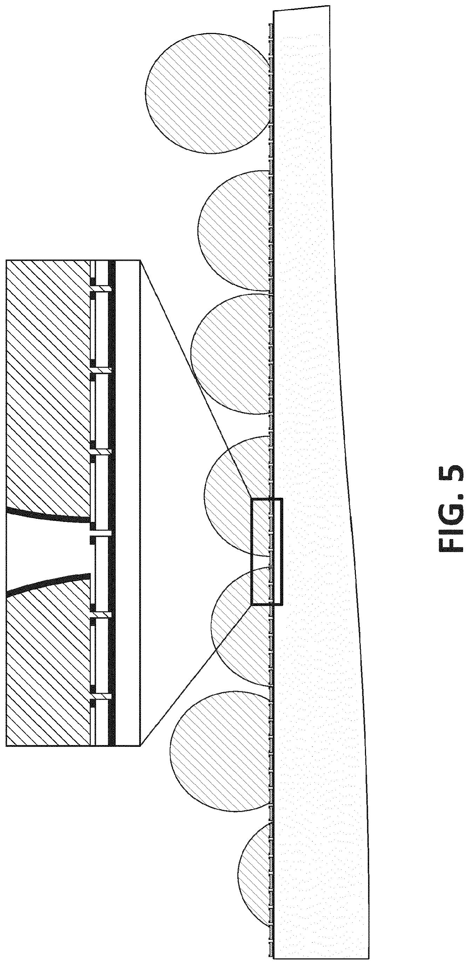

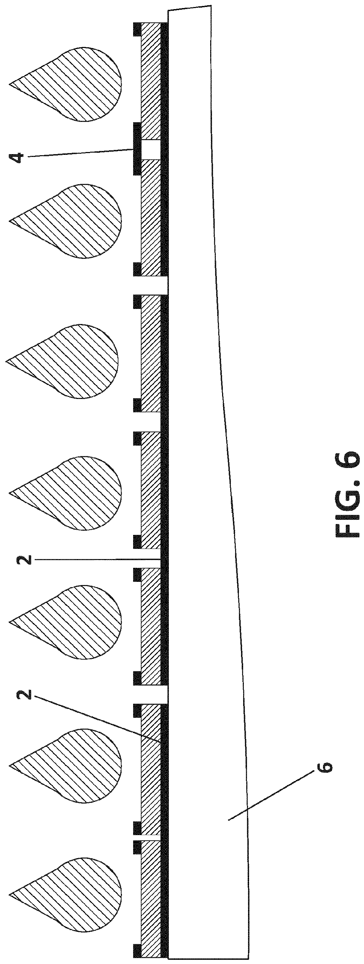

A first preferred embodiment of the invention is shown in Figures 1 and 2 showing an energy harvesting device comprising a single triboelectric generator (1). The triboelectric generator (1), comprises in turn, two top electrodes (4) and a bottom electrode (2) having dimensions ranging from a few nanometres to a few millimetres. Top and bottom electrodes (2, 4) can vary in composition, shape, length, thickness and distance to harvest or detect drops of different sizes.
The bottom electrode (2), in this case, is placed on a substrate (6) and a certain area. On the bottom electrode (2), one or several friction elements (3) are disposed and designed to make contact with the liquid. The top electrodes (4) are placed over the friction elements (3), each one with a certain area always smaller than the bottom electrode area.
The friction elements (3) can be used as fabricated without any attempt to deposit or inject electrical charge on the surface of these elements (3) or they can be charged negatively or positively with the help of charge injection techniques.
From material point of view, friction elements (3) can be organic, inorganic or hybrid, thin films, foils or plates. With respect to conductivity, friction elements (3) can be insulators or semiconductors.
Dimension of each friction element (3) such as thickness, width, length and area can arrange from nanometer to millimeter scale.
Electrodes (2, 4) can be organic, inorganic, hybrid, semiconducting or metallic. Preferably, the electrodes (2, 4) are manufactured from conductive materials that can be metal films or transparent systems such as transparent conducting oxides or alternative conducting materials as conducting polymers, graphene metal meshes and other material formulations that complies with the electrical and optical requirements.
The invention could be manufactured as a self-standing triboelectric generator (1) or can be manufactured on any kind of support, such as flexible and non-flat substrates (6).
The triboelectric element (3) can be charged and could have a determined wetting contact angle with the targeted liquid or fluid. Thus, in the case of water it is preferable that the surface presents a high contact angle and low roll-off-angle to facilitate the movement of the drops on the surface.
The angle between the friction element (3) and the horizontal line could be greater or equal to 0°, thus, allowing the drops to move along the friction layers (3) after the interaction with the top electrode (4).
In an example of the invention, the triboelectric element (3) is produced with a triboelectric film of PFA, negatively charged by an electron beam and with active area of 4 mm$^2$. Electrodes (2, 4) have been fabricated through a shadow mask by physical vapor deposition of silver. In this specific embodiment, the measured harvested energy from a single drop is more than 4 $\mu W$, therefore, the power density of the device is 4 W/m$^2$.
In a second preferred embodiment, a set of triboelectric generators (1) are arranged to form an array or an irregular distribution as shown in Figures 4a and 4b.
The energy produced by the invention can be managed by a power management circuit such as a half wave rectifier, full wave rectifier, buck converter, boost converter or any other designed circuit configuration. The managed energy can be stored in a rechargeable battery, capacitor or supercapacitor.
The dimensions of the triboelectric generators (1) do not have to be the same for all of them and they can vary based on design requirements. The emplacement of the inventions does not have to be regular or homogeneous and it can vary based on design requirements.
In this embodiment, the array of triboelectric generators (1) can harvest energy from multiple raindrops or any fluid flow at the same time. As shown in Figure 5, the array of triboelectric generators (1) can be manufactured using CMOS, MEMS, IC, soft-lithography, printing and laser patterning technologies in micrometre and nanometre scale to produce a large number of inventions in a very small area.
In the figure 5, every water drop will make contact with several devices at the same time to produce electric energy. This requires to scale down the dimensions of the invention to nanometre or micrometre range.
As depicted in Figure 6, in this embodiment, several triboelectric generators (1) could share the substrate (6) or share a top electrode (4).

Configuring the triboelectric generators (1) in nanometre and millimetre scales as an array or following an irregular distribution provide advantages on the performance of the output power:

- A single drop can make contact with several triboelectric generators (1) at the same time and produce larger output power.
- Any form of liquid flow that makes a contact with the array will contact several hundreds of triboelectric generators (1) and produce multiple time the power that a single triboelectric generator (1) can generate.

In a third preferred embodiment, the triboelectric generator (1) could be combined with other sources of energy, leading to a multisource and multiphysics energy harvester system.

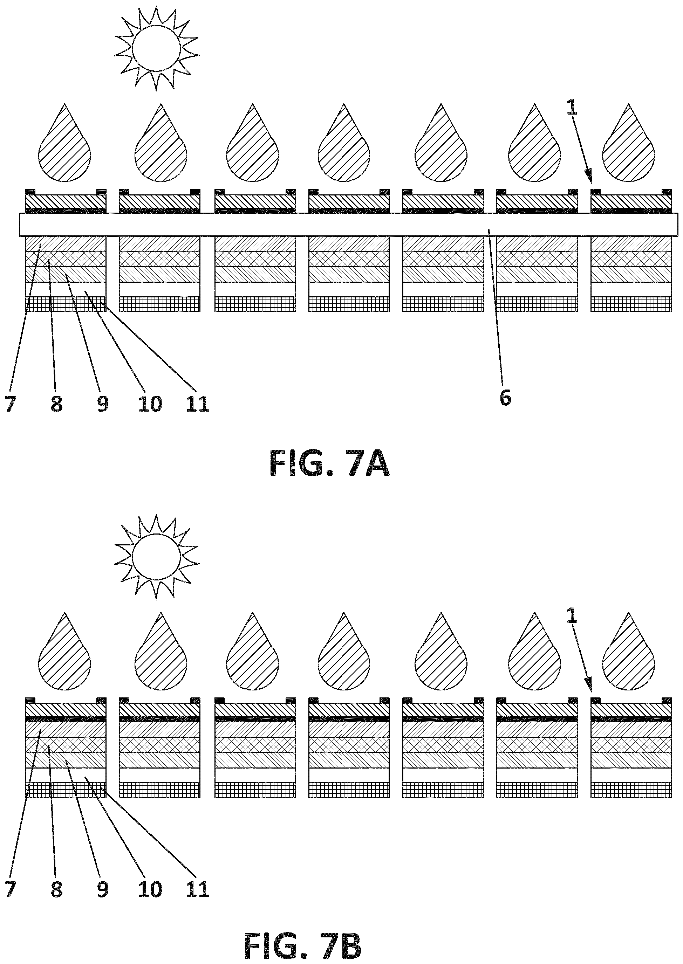

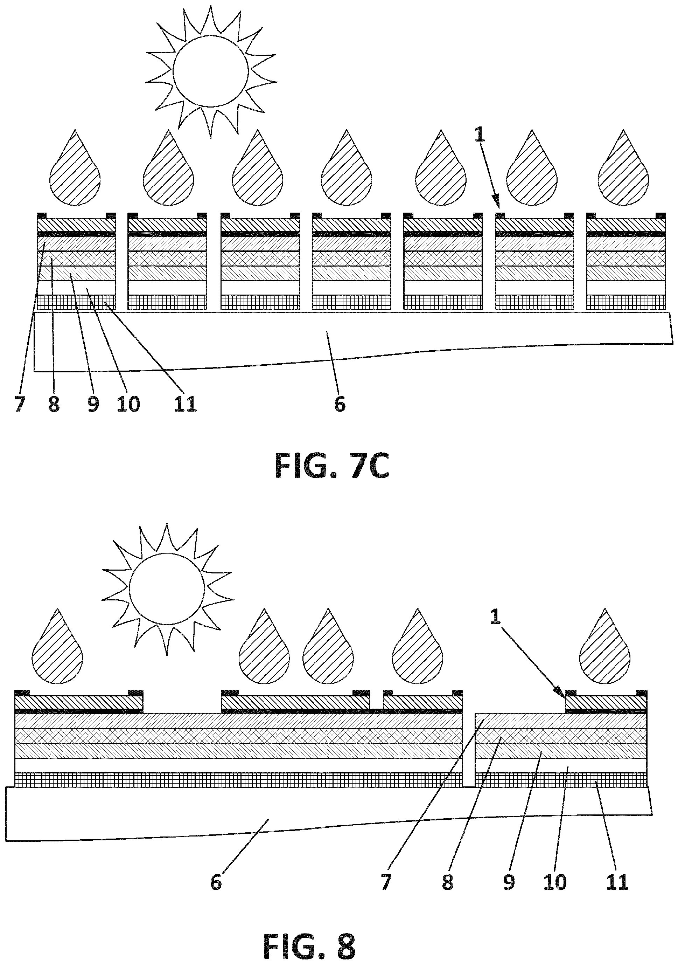

In this case, the multisource and multiphysics energy harvester could be configured as an array of integrated, co-fabricated or co-assembled energy harvesting devices, as shown in Figure 7 and 8. Fig. 7A, B and C shows some of the possible configurations with respect to the substrate as all the energy harvesters emplaced on top of the substrate (Fig. 7C), the invention on top of the substrate and the other energy harvesters below (Fig. 7A) or the complete system working as a self-supported device (Fig. 7B).

Other devices can work based on light energy harvesting (7), thermoelectric (10), pyroelectric (9), piezoelectric (8), and triboelectric (11) power generation.

In the combination with other energy harvesting systems, as in Figures 7A, 7B, 7C and 8, the energy harvesting device can be produced entirely on transparent materials, as, for example, transparent conducting oxides as conductive electrodes (2, 4) and thin layers of triboelectric elements as triboelectric polymeric layers or polymeric, hybrid, ceramic or metal oxide thin films (3). This characteristic allows for a direct implementation of the invention on top of solar cells (7) from silicon to thin film technologies, including dye-sensitized and perovskite-based solar cells.

In this case, the system can be coupled to a multisource power management circuit designed especially for the multiphysic energy harvester.

The invention is also fully compatible with the fabrication of flexible materials on flexible supports, improving the compatibility with vibration and mechanical deformation harvesters.

The order of placement and number of other energy harvesting layers are selected based on design requirements and targeted application, one example of arrangement is shown in Figures 7A, 7B and 7C. The array of energy harvesting devices can include triboelectric generators (1) of different sizes and connections, as shown in Figure 8.

In a fourth preferred embodiment, a self-powered sensor is presented to determine chemical composition of the liquid and physical properties, size of the drops, liquid movement direction, fluid regime for displacement, drop temperature, drop/surface relative temperature, water condensation, dew point, environmental analysis, wind, etc.

In this case, the distribution of triboelectric generators (1) can be designed to answer to the different analytes and environmental agents.

The electrical energy generated by the invention can be used to power a sensor and/or the electrical signal generated by the invention can be used as sensing signal. Being said that in both cases the invention works as a self-powered sensor.

The self-powered sensor analyses the shape, components, amplitude and type of electrical signal (voltage and/or current) generated by the contact of the liquid with the electrodes (2, 4). Also, the surface of the triboelectric element (3) can be further functionalized or modified (physically or chemically) to allow for a specific response to analytes and/or environmental agents.

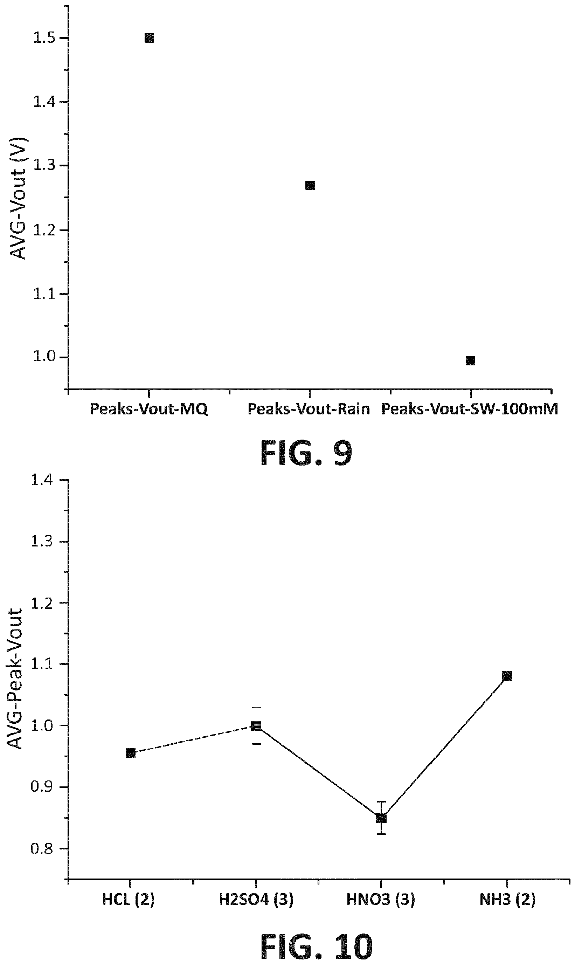

Figure 9 shows the different output voltage of the invention in response to different kinds of water drop making contact with the electrodes (2, 4). The drops include pure water (MQ), Rain water and 100 mM saltwater. Therefore, the invention is capable of distinguishing between conductivity of different drops.

Figure 10 shows similar measurements for different chemicals including acidic and basic liquids and it shows that the invention can distinguish between chemical properties of the drops.

**Claims**

1. An energy harvesting device comprises one or more triboelectric generators (1) comprising:

    - a bottom electrode (2),
    - at least one friction or triboelectric element layer/foil/plate (3) placed over the bottom electrode, and
    - at least two top electrodes (4) placed over the triboelectric layer and defining at least one gap (5) between them, exposing the triboelectric layer to the external environment so that on contacting a drop of liquid makes an electrical connection between the top electrodes varying the capacitance of the triboelectric generators (1).

2. The energy harvesting device according to claim 1, further comprising one or more substrates (6) placed under the triboelectric generators (1).

3. The energy harvesting device according to claim 2, wherein the substrate (6) is flexible or non-flat.

4. The energy harvesting device according to any of previous claims, wherein each top electrode (4) is smaller than the bottom electrode (2).

5. The energy harvesting device according to any of previous claims, wherein the size of each triboelectric generator (1) ranges in the nanometre to millimetre scale.

6. The energy harvesting device according to any of previous claims, wherein the electrodes (2, 4) can have round, triangular or rectangle shape.

7. The energy harvesting device according to any of previous claims, wherein the friction element layers/foils/plates (3) are manufactured without depositing or injecting electrical charge on its surface or are charged negatively or positively with the help of charge injection techniques.

8. The energy harvesting device according to any of previous claims, wherein a plurality of triboelectric generators (1) are distributed and fabricated as an array using CMOS (complementary metal-oxide semiconductors), MEMS (microelectromechanical systems), IC (Integrated Circuit), lithography, direct printing and laser patterning processes, and other high yield manufacturing techniques.

9. The energy harvesting device according to any of previous claims, further comprising at least one photovoltaic or thermosolar cell (7) and/or at least one thermoelectric (10), pyroelectric (9), piezoelectric (8) and/or a different triboelectric (11) energy harvester.

10. The energy harvesting device according to claims 2 and 10, wherein the triboelectric generators (1) and the substrates are of transparent materials to allow light to reach the at least one photovoltaic or thermosolar cell (7) and/or at least one thermoelectric (10), pyroelectric (9) Piezoelectric (8) or triboelectric (11) energy harvester.

11. The energy harvesting device according to claims 2 and 10, wherein the substrate is placed below the triboelectric generator and over the at least one photovoltaic or thermosolar cell (7) and/or at least one thermoelectric (10), pyroelectric (9), piezoelectric (8) and/or a different triboelectric (11) energy harvester or the substrate is placed below the triboelectric generator, the at least one photovoltaic or thermosolar cell (7) and/or at least one thermoelectric (10), pyroelectric (9), piezoelectric (8) and/or a different triboelectric (11) energy harvester.

12. The energy harvesting device according to claim 11, wherein the transparent materials are conductive oxides, ceramics, hybrid materials, or polymers, graphene or metal meshes for the electrodes (2, 4) and thin layers of polymers, ceramics, hybrid or oxide for the triboelectric element layer/foil/plate (3).

13. The energy harvesting device according to any of previous claims, wherein the triboelectric generators (1) are arranged in a sloped position with respect to a horizontal plane.

14. The energy harvesting device according to any of previous claims, further comprising a power management unit which is connected to the triboelectric generators (1) and at least one photovoltaic or thermosolar cell (7) and/or at least one thermoelectric (10), pyroelectric (9), piezoelectric (8) or triboelectric (11) energy harvester.

15. The energy harvesting device according to any of previous claims, wherein the triboelectric generators (1) is configured to produce a specific output electrical signal (voltage/current) in response to the contact of liquid with the top electrodes (4) based on chemical and/or physical properties of the liquid, working as a self-powered sensor.

16. The energy harvesting device according to any of previous claims, wherein the triboelectric generators (1) is configured to work as charging unit compatible with the powering of an external sensor.

17. The energy harvesting device according to claim 16, wherein the surface of the triboelectric element layer/foil/plate (3) is chemically and/or physically complete or partially functionalized and/or modified to react to certain analytes or agents.

**FIG. 1**

**FIG. 2**

FIG. 3

**FIG. 4A**

FIG. 4B

FIG. 5

FIG. 6

FIG. 7A

FIG. 7B

**FIG. 7C**

**FIG. 8**

FIG. 9

FIG. 10

**Europäisches Patentamt**
**European Patent Office**
**Office européen des brevets**

# EUROPEAN SEARCH REPORT

Application Number

EP 21 38 2786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 171 416 A1 (KOREA ELECTRONICS TECHNOLOGY [KR]) 24 May 2017 (2017-05-24) | 1-8, 13-16 | INV. H02N1/04 |
| Y | * paragraphs [0026], [0030], [0033], [0034], [0057], [0058] * <br> * figures 1,4 * | 9 | |
| Y | KR 2021 0004437 A (POSTECH RES & BUSINESS DEV FOUND [KR] ET AL.) 13 January 2021 (2021-01-13) * paragraph [0029] * | 9 | |
| Y | KR 2020 0021659 A (UNIV INDUSTRY COOPERATION GROUP KYUNG HEE UNIV [KR]) 2 March 2020 (2020-03-02) * paragraphs [0031] – [0035] * * figure 1 * | 9 | |
| | | | **TECHNICAL FIELDS SEARCHED (IPC)** <br><br> H02N |

The present search report has been drawn up for all claims

| Place of search | Date of completion of the search | Examiner |
|---|---|---|
| Berlin | 10 February 2022 | Foussier, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

Europäisches
Patentamt
European
Patent Office
Office européen
des brevets

**Application Number**

EP 21 38 2786

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 13-16

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

**Application Number**

EP 21 38 2786

The Search Division considers that the present European patent application does not comply with the requirements of unity of invention and relates to several inventions or groups of inventions, namely:

    1. claims: 1-9, 13-16

        Energy harvesting device comprising at least one other
        energy harvester
                          ---

    2. claims: 10-12

        Energy harvesting device having the triboelectric generators
        and the substrates formed of transparent material.
                          ---

    3. claim: 17

        Energy harvesting device having the triboelectric layer
        being chemically or physically functionalized
                          ---

## ANNEX TO THE EUROPEAN SEARCH REPORT
## ON EUROPEAN PATENT APPLICATION NO.

EP 21 38 2786

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2022

| Patent document cited in search report | | Publication date | Patent family member(s) | | Publication date |
|---|---|---|---|---|---|
| EP 3171416 | A1 | 24-05-2017 | EP 3171416 | A1 | 24-05-2017 |
| | | | KR 20160008863 | A | 25-01-2016 |
| | | | US 2017149358 | A1 | 25-05-2017 |
| | | | WO 2016010263 | A1 | 21-01-2016 |
| KR 20210004437 | A | 13-01-2021 | NONE | | |
| KR 20200021659 | A | 02-03-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019280620 A
- WO 15154693 A
- CN 105099260